# EUROPÄISCHE PATENTSCHRIFT

(11) **EP 1 089 867 B1**
(45) Veröffentlichungstag und Bekanntmachung des Hinweises auf die Patenterteilung: **11.12.2002**
(21) Anmeldenummer: 99924910.5
(22) Anmeldetag: 08.05.1999
(51) Int. Cl.: B30B 5/02, B29C 63/16, B27D 1/08

(54) **VERFAHREN ZUM FOLIENBESCHICHTEN VON PLATTENFÖRMIGEN WERKSTÜCKEN**
METHOD FOR FILM-COATING PLATE-SHAPED WORKPIECES
PROCEDE POUR APPLIQUER UNE FEUILLE SUR DES PIECES EN FORME DE PLAQUE

(30) Priorität: 13.06.1998 DE 19826494
(43) Veröffentlichungstag der Anmeldung: 11.04.2001
(73) Patentinhaber: Heinrich Wemhöner GmbH & Co.KG Maschinenfabrik, 32052 Herford (DE)
(72) Erfinder: GROSSESTRANGMANN, Jörg, D-59555 Lippstadt (DE)
(74) Vertreter: Elbertzhagen, Otto, Dipl.-Ing.
(86) Internationale Anmeldenummer: EP9903164
(87) Internationale Veröffentlichungsnummer: WO99065667

(56) Entgegenhaltungen:
- DE-A- 4 233 622
- DE-A- 19 505 523
- GB-A- 925 339
- US-A- 3 325 329
- US-A- 4 447 282
- US-A- 5 225 027

## Beschreibung

### TECHNISCHES GEBIET

Die Erfindung bezieht sich auf ein Verfahren zum Beschichten von plattenförmigen Werkstücken aus Holzersatzstoffen, wie insbesondere Möbelteile aus Spanplatten- oder MDF-Material, mit einer Folie in einer Presse, in der die Folie zwecks begrenzter Dehnbarkeit erwärmt und mittels eines Luftkissens entweder unmittelbar oder mittels einer zwischenliegenden, elastischen Membran von oben her auf die Oberseite der Werkstücke aufgepreßt wird, wobei die Werkstücke mit ihren Unterseiten in Abstand von einem sie tragenden Werkstücktisch auf daran oberseitig vorstehenden Stützelementen aufliegen, die gegenüber den randlichen Werkstück-Schmalflächenseiten nach innen zur Werkstückmitte hin plaziert sind, und wobei die Folie sich um die Werkstück-Schmalflächenseiten herum bis zur Auflage auf dem Werkstücktisch zieht. Nach diesem Verfahren werden vor allem folienbeschichtete Möbelfrontplatten in gehobener Qualität hergestellt.

### STAND DER TECHNIK

Bei bekannten Verfahren dieser Art wird erwärmte Folie auf die formatierten und profilierten Trägerplatten aufgepreßt, wobei es auf eine verwerfungsfreie Anlage der Folie nicht nur an den ebenen Flächen der Werkstücke, sondern auch an den dreidimensional konturierten Bereichen der Werkstücke ankommt. Je nach der Profilierung der Werkstücke und der Beschaffenheit der verwendeten Folie bedient man sich entweder einer Membranpresse, wie sie aus der DE 30 01 872 A1 bekannt ist. In einer solchen Presse wird das Luftkissen hinter einer Membran aufgebracht und infolgedessen die Folie mittelbar durch die Membran hindurch von dem Luftkissen beaufschlagt. Oder man verwendet eine Presse, bei der die Folie selbst unmittelbar von dem Luftkissen beaufschlagt wird, wozu an der Presse ein entsprechender Dichtrahmen vorgesehen werden muß, um den Raum oberhalb der in der Presse gehaltenen Folie luftdicht abschließen zu können. Ein solcher Dichtrahmen wird auch bei Membranpressen eingesetzt, wie aus der DE-PS 954 196 be- kannt ist. Es gibt auch Membranpressen, um die Werkstücke sowohl an ihren Oberseiten als auch an ihren Unterseiten beaufschlagen zu können, um zugleich von diesen beiden Seiten her ein Beschichtungsmaterial auf die Werkstücke aufbringen zu können, vergleiche DE 30 03 619 A1, DE 4 933 622A. In all diesen Fällen wird so verfahren, daß sich das Beschichtungsmaterial auch um die randlichen Werkstückschmalflächenseiten herumziehen kann, wozu auf dem Werkstücktisch oberseitig vorstehende Stützelemente für die Werkstücke vorgesehen werden müssen.

Die Beschichtungsfolie ist auch im erhitzten Zustand nur begrenzt dehnfähig. Zwar kann hierdurch bei den Werkstücken die Folie bis um die seitlichen Schmalflächenseiten herumgezogen werden, es muß aber verhindert werden, daß sich die Folie an der Unterseite der auf den Stützelementen auf dem Werkstücktisch hochliegenden Werkstücke zu stark einbuchtet. Reißt die Folie nämlich an dieser Stelle, ist eine sichere Anlage der Folie an den betreffenden Werkstückseiten nicht mehr gewährleistet, und es entsteht auf diese Weise oft Ausschuß. Dies gilt vor allem, wenn die Folie selbst unmittelbar durch das Luftkissen beaufschlagt wird, denn bei einem Folienriß dringt dann die Luft auf die Anlageseite der Folie und bläht diese auf.

Die Werkstücktische sind in der Regel nicht fester Bestandteil der Presse, sondern können außerhalb der Presse bestückt, danach in die Presse eingegeben und anschließend aus der Presse herausgenommen werden, um die beschichteten Werkstücke aus dem sogenannten Folienteppich auszulösen. Bei dieser Art von Werkstücktischen handelt es sich um Belegtische, die in Vorbereitung des Preßvorgangs an denjenigen Stellen, an denen die Werkstücke angeordnet werden, mit den Stützelementen bestückt werden, bei denen es sich vornehmlich um plattenförmige Auflagen handelt. Diese Auflagen sind im Umriß etwa 3 mm kleiner als die plattenförmigen Werkstücke, womit entsprechend die daraufliegenden Werkstücke randlich um 3 mm über die Auflagen beim Preßvorgang überstehen. Die lediglich um 3 mm zurückliegenden Schmalflächenseiten der Auflagen verhindern beim Preßvorgang ein allzu starkes Einbuchten der Folie an der Werkstückunterseite, denn die Folie legt sich beim Preßvorgang auch an diese Schmalflächenseiten der plattenförmigen Auflagen an. Der erhebliche Nachteil dieser bekannten Stützelemente ist, daß für jedes Werkstückformat individuell angepaßte Auflagen vorgesehen werden müssen. Dafür muß entweder ein immenser Vorrat an solchen Auflagen bereitgehalten werden, oder für spezielle Einsatzfälle werden Auflagen gesondert gefertigt, wobei man Auflagen in kleineren Formaten aus vorher benutzten Auflagen in größeren Formaten herstellen kann.

Es gibt auch andere Stützsysteme für die Werkstücke, die punktuelle Abstützungen an den Werkstückunterseiten vorsehen. So können im Werkstücktisch über dessen Oberseite ausfahrbare Stifte vorgesehen werden, die in einem bestimmten Raster angeordnet sind. Hierbei kann der vorerwähnte 3 mm-Rücksprung zu den Werkstückflächenseiten nicht eingehalten werden, ein derart kleines Raster für die Stützstifte ist in der Praxis nicht realisierbar. Ein größerer Rücksprung zwischen den Stiften und den Schmalflächenseiten der Werkstücke ist beim Verpressen in einer Membranpresse noch verkraftbar, weil die relativ dicke Membran nur begrenzt elastisch ist und ein Unterbuchten und Unterkriechen unter die Werkstückunterseiten unter Mitnahme der Folie bis zur Reißgrenze verhindert, sofern es sich um eine weniger empfindliche Folie handelt. Bei empfindlichen Folien und insbesondere beim membranlosen Verpressen führt ein größerer Rücksprung zwischen den unterseitigen Stützelementen und den Schmalflächenseiten der Werkstücke jedoch zum Folienriß, den es zu vermeiden gilt. Es gibt auch andere Beschichtungsverfahren, bei denen die Werkstücke oberseitig mittels Druck und rückseitig mittels Unterdruck beaufschlagt werden, wie aus der US-PS 2,392,108 bekannt ist. Auch damit lassen sich die aufgezeigten Schwierigkeiten nicht überwinden.

### DARSTELLUNG DER ERFINDUNG

Hier setzt nun die Erfindung ein. Ihr liegt die Aufgabe zugrunde, ein Verfahren der gattungsgemäßen Art vorzuschlagen, bei dem die Abstützung der Folie zwischen der Werkstückunterseite und der Tischoberseite nicht durch die Stützelemente, sondern analog der Druckbeaufschlagung der Folie an ihrer Außenseite erfolgt.

### WEGE ZUR AUSFÜHRUNG DER ERFINDUNG

Diese Aufgabe wird bei einem Verfahren der gattungsbildenden Art nach der Erfindung durch die kennzeichnenden Merkmale des Patentanspruchs 1 gelöst.

Für die Erfindung ist wesentlich, daß jeweils in den Zwischenräumen zwischen den Werkstückunterseiten der Folie und der Tischoberseite durch die darin eingebrachte Stützluft ein Gegendruck erzeugt wird, also ebenfalls ein Luftkissen, welches ein übermäßiges Einbuchten der Folie bis zur Reißgrenze an der Werkstückunterseite verhindert. Grundsätzlich ist man dadurch in der Art und in der Gestaltung der Stützelemente von dem Format der Werkstücke unabhängig. Es können deshalb für unterschiedliche Werkstückformate immer wieder verwendbare Stützelemente vorgesehen werden, die Herstellung und die Bereithaltung formatangepaßter Auflagen erübrigt sich daher. Vor allem kann das erfindungsgemäße Gegendrucksystem auch bei solchen Belegtischen zum Einsatz kommen, die maschinell ausfahrbare Stifte oder Pins als Stützelemente haben.

Der durch die Stützluft erzeugte Gegendruck an den Werkstückunterseiten muß dem zeitabhängigen Druckauf- und -abbau im Bereich des die Folie beaufschlagenden Luftkissens entsprechen, denn die Folie kann aufgrund ihrer begrenzten Stabilität nur einen gewissen Differenzdruck ausgleichen. So kann noch nach wie vor ein Einwölben der Folie in den Zwischenraum zwischen den Werkstückunterseiten und der Oberseite des Werkstücktisches vorgesehen werden, nur darf die Folie hierbei nicht bis zur Reißgrenze beansprucht werden. Der Druckaufbau und der Druckabbau der Stützluft muß deshalb demjenigen des Luftkissens zeitgleich nachfolgen, wobei auch die dynamischen Druckausgleichsvorgänge zu berücksichtigen sind. Zweckmäßig ist, wenn sich unmittelbar an der Folie selbst eine Differenz zwischen dem äußeren Luftkissendruck und dem inneren Stützluftdruck ergibt, die mit der Spannkraft des Folienmaterials ausgeglichen werden kann. Insoweit ist der Gegendruck der Stützluft geringer als der Druck des Luftkissens, wobei man zweckmäßig einen konstanten Differenzdruck vorsieht, damit die Folie möglichst wenig schwellenden Druckbelastungen ausgesetzt wird.

## Patentansprüche

1. Verfahren zum Beschichten von plattenförmigen Werkstükken aus Holzersatzstoffen, wie insbesondere Möbelteile aus Spanplatten- oder MDF-Material, mit einer Folie in einer Presse, in der die Folie zwecks begrenzter Dehnbarkeit erwärmt und mittels eines Luftkissens entweder unmittelbar oder mittels einer zwischenliegenden, elastischen Membran von oben her auf die Oberseite der Werkstücke aufgepreßt wird, wobei die Werkstücke mit ihren Unterseiten in Abstand von einem sie tragenden Werkstücktisch auf daran oberseitig vorstehenden Stützelementen aufliegen, die gegenüber den randlichen Werkstück-Schmalflächenseiten nach innen zur Werkstückmitte hin plaziert sind, und wobei die Folie sich um die Werkstück-Schmalflächenseiten herum bis zur Auflage auf dem Werkstücktisch zieht,
**dadurch gekennzeichnet,**
**daß** unterhalb jedes Werkstücks durch den Werkstücktisch hindurch bei auf dem Werkstücktisch aufliegender Folie in den von der Werkstückunterseite, der Folie und der Tischoberseite begrenzten Zwischenraum Stützluft derart eingedrückt wird, daß ein Einwölben der Folie in diesen Zwischenraum bis zum Erreichen der Reißgrenze verhindert ist.

2. Verfahren nach Anspruch 1,
**dadurch gekennzeichnet,**
**daß** entsprechend dem zeitabhängigen Druckauf- und -abbau in dem die Folie beaufschlagenden Luftkissen der Druckauf- und -abbau der Stützluft in dem Zwischenraum unterhalb der Werkstücke zeitabhängig vorgenommen wird.

3. Verfahren nach Anspruch 2,
**dadurch gekennzeichnet,**
**daß** der Druck der Stützluft in dem Zwischenraum zu jedem Zeitpunkt geringer als der Luftdruck im Luftkissen ist.

4. Verfahren nach Anspruch 3,
**dadurch gekennzeichnet,**
**daß** zwischen der Stützluft im Zwischenraum unterhalb der Werkstücke und der Luft im Luftkissen ein konstanter Differenzdruck besteht.

## Claims

1. Method for film coating plate-shaped workpieces of wood substitute materials, such as in particular furniture parts of chipboard or MDF material, with a foil in a press in which the foil is heated to have a limited degree of elasticity and is then pressed by means of an air cushion either directly or indirectly by means of an intermediate elastic membrane from above onto the top side of the workpieces, wherein the workpieces rest by their underneath sides at a distance from a workpiece table which supports them, on support elements which protrude up from the top of the table and are placed inwards towards the centre of the workpiece opposite the narrow marginal flat sides of the workpiece and wherein the foil is drawn round the narrow flat sides of the workpiece until bearing onto the workpiece table,
**characterised in that**
underneath each workpiece when the foil is resting on the workpiece table, support air is pressed through the workpiece table into the interspace which is defined by the underneath of the workpiece, the foil and the top side of the table so that the foil is prevented from arching into this interspace until reaching the tear limit.

2. Method according to claim 1,
**characterised in that**
the pressure build up and break down of the support air is undertaken time-dependent in the interspace underneath the workpieces corresponding to the time-dependent build up and break down of pressure in the air cushion biasing the foil.

3. Method according to claim 2,
**characterised in that**
the pressure of the support air in the interspace is at any moment in time less than the air pressure in the air cushion.

4. Method according to claim 3,
**characterised in that**
a constant differential pressure exists between the support air in the interspace underneath the workpieces and the air in the air cushion.

## Revendications

1. Procédé pour revêtir avec une feuille des pièces à usiner en forme de plaques en matières de remplacement de bois, notamment des éléments de meubles en panneaux d'agglomérés ou en matières MDF, à l'aide d'une presse dans laquelle ladite feuille est chauffée, en vue de lui conférer une extensibilité limitée, et pressée, d'en haut, par un coussin pneumatique, directement ou par l'intermédiaire d'une membrane élastique, intercalée, sur la surface supérieure de ladite pièce à usiner dont la surface inférieure repose sur des éléments d'appui qui équipent le côté supérieur d'une table, à distance de laquelle ils maintiennent ainsi la surface inférieure de ladite pièce à usiner, ces éléments d'appui étant disposés vis-à-vis des bords des côtés étroits de celle-ci et orientés vers l'intérieur, en direction de son centre, la feuille étant étirée autour des côtés étroits de la pièce à usiner, jusqu'à ce qu'elle vienne buter contre la table d'usinage,
**caractérisé en ce que**,
au dessous de chaque pièce à usiner, la feuille reposant sur celle-ci, de l'air de support est injecté dans l'intervalle, limité par le côté inférieur de la pièce à usiner, la feuille et le côté supérieur de la table d'usinage, de manière à éviter que la feuille ne se bombe dans cet intervalle jusqu'à atteindre la limite de déchirure.

2. Procédé selon la revendication 1,
**caractérisé en ce que**
la montée et la baisse de pression de l'air de support s'effectue en fonction du temps, dans l'intervalle, au-dessous de la pièce à usiner, conformément à la montée et à la baisse de pression s'effectuant en fonction du temps dans le coussin pneumatique qui agit sur la feuille.

3. Procédé selon la revendication 2,
**caractérisé en ce que**
la pression de l'air de support dans l'intervalle est, à tout instant, inférieure à la pression d'air qui règne dans le coussin pneumatique.

4. Procédé selon la revendication 3,
**caractérisé en ce**
**qu'**une pression différentielle constante existe entre l'air de support dans l'intervalle, au dessous de la pièce à usiner, et l'air contenu dans le coussin pneumatique.
